(19) 

Europäisches Patentamt
European Patent Office
Office européen des brevets

(11) **EP 1 871 094 A1**

(12) **EUROPEAN PATENT APPLICATION**
published in accordance with Art. 153(4) EPC

(43) Date of publication:
**26.12.2007 Bulletin 2007/52**

(51) Int Cl.:
*H04N 5/20* (2006.01)  *G06T 5/00* (2006.01)
*H04N 1/407* (2006.01)  *H04N 5/243* (2006.01)

(21) Application number: **06731332.0**

(22) Date of filing: **31.03.2006**

(86) International application number:
**PCT/JP2006/307384**

(87) International publication number:
**WO 2006/109702 (19.10.2006 Gazette 2006/42)**

(84) Designated Contracting States:
**DE FR GB**

(30) Priority: **12.04.2005 JP 2005114189**

(71) Applicant: **Olympus Corporation**
**Tokyo 151-0072 (JP)**

(72) Inventor: **ON, Seigo**
**1920023 (JP)**

(74) Representative: **von Hellfeld, Axel**
**Wuesthoff & Wuesthoff**
**Patent- und Rechtsanwälte**
**Schweigerstrasse 2**
**81541 München (DE)**

(54) **IMAGE PROCESSOR, IMAGING APPARATUS, AND IMAGE PROCESSING PROGRAM**

(57)     The invention provides an imaging apparatus wherein an image taken through lens system·stop (111) and CCD (112) are converted by A/D (113) into an image signal which is in turn subjected to tone transformation processing at tone transformation processing (106). The image signal is divided at signal division block (103) into at least one zone or zones, and image transformation processing is applied at image signal conversion block (104) to a digital image signal corresponding to the zone for each zone. Tone transformation characteristics calculation block (105) determines transformation characteristics for tone transformation processing of an image signal generated at image signal conversion block (104). Tone transformation processing block (106) implements tone transformation processing using the transformation characteristics determined at image signal conversion block (104). Such tone transformation processing may be applied to image processors other than the imaging apparatus.

FIG. 1

**Description**

ART FIELD

The present invention relates to an image processor and imaging apparatus capable of curtailing tone transformation processing time, and an image processing program.

BACKGROUND ART

In current digital still cameras or video cameras, the tone widths (of the order of for instance 10 to 12 bits) of entered images signals or image signals being processed are set wider than those of final output signals (for instance 8 bits) for the purpose of preventing an image quality deterioration by reason of shifts in digital signal processing. In that case, tone transformation must be implemented in such a way as to match with the tone width in the output system. So far, this has been implemented with fixed tone characteristics for a standard scene. Further, there has also been an adaptive transformation method proposed, which involves dividing an image signal into multiple zones, and applying tone transformation to the image signal with tone transformation characteristics varied independently for each zone.
For instance, Patent No. 3465226 discloses an example of tone transformation wherein an image signal is divided into zones on the basis of texture information, and adaptive tone transformation is applied to each zone. Further, JP(A)2002-94998 discloses a method of implementing space variant gamma-correction (for each zone) and white balance correction. It is said that there are improvements in the limited latitude (acceptable width of exposure) inherent in digital cameras.
A problem with the method set forth in the aforesaid Patent No. 3465226 is, however, that the tone transformation processing for each zone takes much time. In other words, the user must change the parameter for tone transformation processing to obtain a desired image signal; there is a lot more time taken to correct the parameter on the basis of the results of that processing. A problem with the method set forth in JP(A)2002-94998 is that the processing steps involved are complicated, because tone correction is applied to an images in a frame memory with white balance correction coefficients varying with pixel positions, and gamma tone correction is implemented using individual tone curves depending on the luminance of individual pixel positions.
In view of such problems with the prior art, an object of the present invention is to provide an image processor and imaging apparatus capable of curtailing the processing time for tone transformation, and an image processing program as well.

SUMMARY OF THE INVENTION

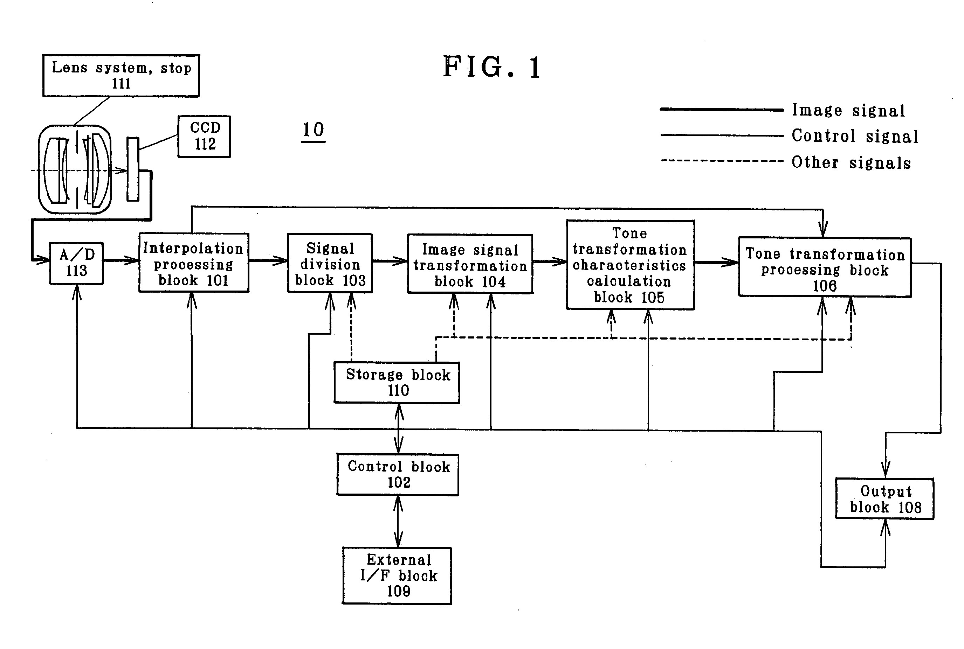

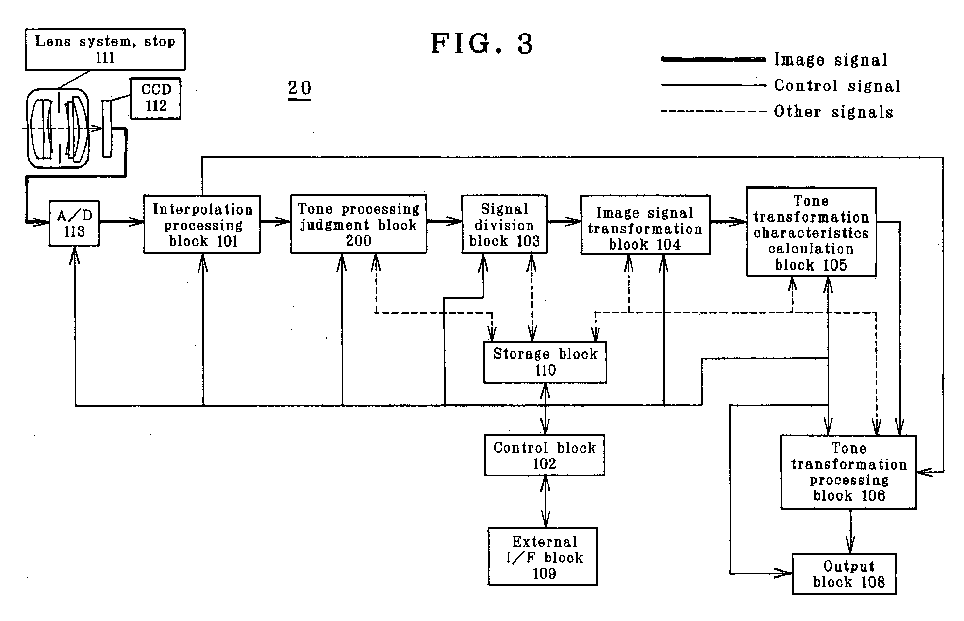

(1) According to the first aspect of the invention, the aforesaid object is accomplished by the provision of an image processor adapted to apply tone transformation processing to an image signal, characterized by comprising a signal division means for dividing said image signal into at least one zone or zones, a first transformation means for applying image transformation processing to an image signal corresponding to said zone for each said zone, a transformation characteristics determination means for determining transformation characteristics for tone transformation processing applied to said image signal on the basis of an image signal generated at said first transformation means, and a second transformation means for applying tone transformation processing to said image signal for each said zone using said transformation characteristics determined at said transformation characteristics determination means.
The invention (1) according to the first aspect is carried out in the first and second embodiments shown in Figs. 1 to 5. The signal division means is equivalent to the signal division block 103 shown in Figs. 1 and 3; the first transformation means is equivalent to the image signal transformation block 104 shown in Fig. 1; the transformation characteristics determination means is equivalent to the tone transformation characteristics calculation block 105 shown in Fig. 1 and 3; and the second transformation means is equivalent to the tone transformation processing block 106 shown in Figs. 1 and 3.
According to the invention (1), the image signal is divided into at least one zone or zones, and the image transformation processing by the first transformation means is implemented depending on the zones, so that the tone transformation processing is applied to the image signal obtained by the image transformation processing by the first transformation means. Thus, image processing with the characteristics for each zone in mind is implemented as the pre-processing for the tone transformation processing. In other words, flexible tone transformation processing is applied to the image signal depending on the characteristics of the zones of the divided image signal so that the time taken for tone transformation processing can be curtailed.
(2) According to the invention of the second aspect, the aforesaid invention (1) is further characterized in that said signal division means divides said image signal into at least one zone or zones on the basis of information of said image signal. The invention (2) is carried out in the first and second embodiments shown in Figs. 1 to 5. At the signal division block 103 shown in Figs. 1 and 3, an image taking condition at the time when an image for forming said image signal is taken is assessed, and the image signal obtained from that image is divided into at least one zone or zones on the basis of that image taking condition. According to the invention (2), the image signal is divided into at least one zone or zones on the basis of the image taking condition. Thus, the image signal is divided into at least one zone or zones on the basis of the image taking condition; signal division is optimized depending on the taking condition.

(3) According to the invention of the third aspect, the aforesaid invention (1) is further characterized by further comprising a kind-of-division reception means for receiving from a user a designation of in what kind said image signal is divided by said signal division means into at least one zone or zones, wherein said signal division means divides said image signal into at least one zone or zones on the basis of the designation of the kind of division received at said kind-of-division reception means.

The invention (3) according to the third aspect is carried out in the first and second embodiments shown in Figs. 1 to 5. The signal division means is equivalent to the signal division block 103 shown in Figs. 1 and 3. According to the invention (3), the image signal is divided into at least one zone or zones on the basis of the user's order. According to the invention (3) wherein the image signal is divided into at least one zone or zones using the information designated by the user, there is an increased degree of flexibility in the division of the signal into zones.

(4) According to the invention (4) of the fourth aspect, the aforesaid invention (1) is further characterized in that said first transformation means applies image transformation processing to said image signal such that there is a decrease in the amount of data corresponding to at least one zone of said at least one zone or zones.

The invention (4) is carried out in the first and second embodiments shown in Figs. 1 to 5. The processing of decreasing the amount of data is implemented at the image signal transformation block 104 shown in Figs. 1 and 3. According to the invention (4), the amount of data of the image signal is decreased by image signal transformation processing before the tone transformation characteristics. Thus, by applying tone transformation processing to the image signal with a decreased amount of data, the time taken for tone transformation processing can be curtailed. For instance, if the image signal is divided into at least one zone or zones and the amount of data of the image signal is decreased depending on the degree of importance of the zones, it is then possible to increase the processing speed without detrimental to the image quality of the zone of much more importance.

(5) According to the fifth aspect, the aforesaid invention (4) is further characterized by further comprising a degree-of-decrease reception means for receiving from a user a designation as to a degree of decrease in an amount of data in applying image transformation processing to said image signal by said first transformation means such that there is a decrease in the amount of data, wherein said first transformation means applies image transformation processing to said image signal such that there is a decrease in the amount of data on the basis of the degree of decrease received at said degree-of-decrease reception means.

The invention (5) is carried out in the first and second embodiments shown in Fig. 1 to 5. The degree-of-decrease reception means is equivalent to the external I/F block 109 shown in Figs. 1 and 3. According to the invention (5) the user designates a reduction rate via the external I/F block 109 to implement reduction processing. For instance, the user designates pertinent reduction rates to the zone of much more importance and the rest for reduction processing. According to this arrangement wherein the reduction rate is varied for each zone, processing can be implemented while the balance between image quality and processing speed is flexibly varied.

(6) According to the sixth aspect, the aforesaid invention (4) is further characterized in that said first transformation means figures out a representative for at least one zone of said at least one zone or zones from said image signal, thereby applying image transformation processing to said image signal such that there is a decrease in the amount of data corresponding to said zone.

The invention (6) is carried out in the first and second embodiments shown in Figs. 1 to 5. The calculation of the representative is implemented by the image signal transformation block 104 shown in Figs. 1 and 3. According to the invention (6), tone transformation processing is going to be implemented using the representative signal value of the image signal; it is possible to implement tone transformation suitable for each image at high speeds.

(7) According to the seventh aspect, the invention as recited in any one of (1) to (6) is further characterized by further comprising a transformation processing implementing means for judging whether or not image transformation processing by said first transformation means is to be implemented on the basis of a taking condition when an image for forming said image signal is taken, wherein when said transformation processing implementing means judges that image transformation processing by said first transformation means is to be implemented, image transformation processing by said first transformation processing is implemented.

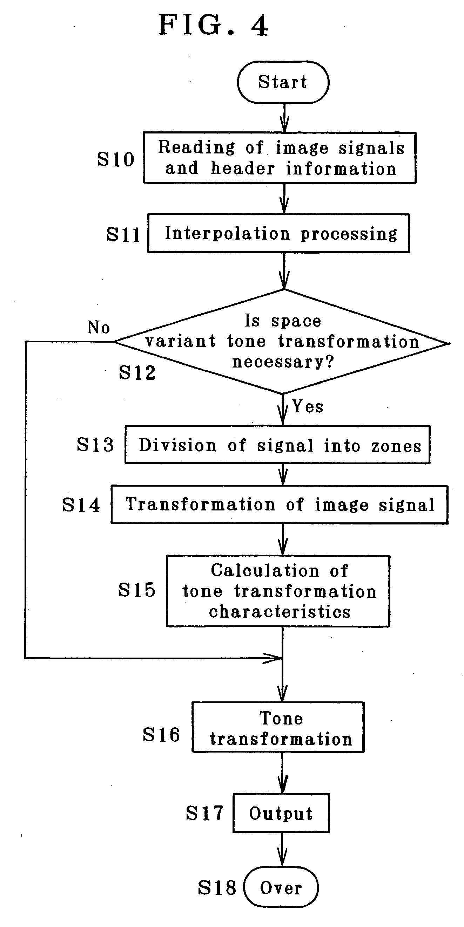

The invention (7) is carried out in the second embodiment shown in Figs. 3 and 4. The transformation processing implementing means by which whether or not the image transformation processing by said first transformation means is to be implemented is judged on the basis of the taking condition at the time when the image for forming said image signal is equivalent to the tone processing judgment block 200 shown in Fig. 3.

According to the invention (7), whether or not the image transformation processing by said first transformation means is to be implemented is judged on the basis of the taking condition, and only when necessary, the image transformation processing by said first transformation means is so implemented that the optimum processing speed is obtainable.

(8) According to the eighth aspect of the invention, the aforesaid invention (1) is further characterized by further comprising a transformation processing implementing means for judging whether or not image transformation processing by said first transformation means is to be implemented on the basis of a order from a user, wherein when said transformation processing implementing means judges that image transformation processing by said first transformation means is to be implemented, image transformation processing by said first transformation means is implemented.

The invention (8) is carried out in the second embodiment shown in Figs. 3 and 4. The transformation processing implementing means for judging whether or not image transformation processing by said first transformation means is to be implemented on the basis of an order from a user is equivalent to the tone processing judgment block 200.

According to the invention (8), whether or not the image transformation processing by said first transformation means is to be implemented is judged on the basis of the order from the user, and only when necessary, the image transformation processing by said first transformation means is so implemented that the optimum processing speed is obtainable with a high degree of flexibility.

(9) According to the ninth aspect of the invention, the aforesaid invention (1) is further characterized by further comprising a transformation processing implement means for judging whether or not image transformation processing by said first transformation means is to be implemented on the basis of information of the image signal, wherein when said transformation processing implementing means judges that image transformation processing by said first transformation means is to be implemented, image transformation processing by said first transformation means is implemented.

The invention (9) is carried out in the second embodiment shown in Figs. 3 and 4. The transformation processing implementing means for judging whether or not image transformation processing by said first transformation means is to be implemented on the basis of information of the image signal is equivalent to the tone processing judgment block 200 shown in Fig. 3.

According to the invention (9), whether or not the image transformation processing by said first transformation means is to be implemented is judged on the basis of the information of the image signal, and only when necessary, the image transformation processing by said first transformation means is so implemented that the optimum processing speed is obtainable with a high degree of flexibility.

According to the 10th aspect of the invention, there is an imaging apparatus provided, which comprises an imaging means and adapted to apply tone transformation processing to an image signal obtained from an image taken by said imaging means, characterized by further comprising a signal division means for dividing said image signal into at least one zone or zones, a first transformation means for applying image transformation processing to an image signal corresponding to said zone for each said zone, a transformation characteristics determination means for determining transformation characteristics for tone transformation processing applied to an image signal generated at said first transformation means, and a second transformation means for applying tone transformation processing to said image signal for each said zone using said transformation characteristics determined at said transformation characteristics determination means.

The invention (10) is carried out in the first and second embodiments shown in Figs. 1 to 5. The imaging means is equivalent to the lens system·stop 111 and CCD 112 shown in Figs. 1 and 3. The signal division means, first transformation means, transformation characteristics determination means and second transformation means are equivalent to the signal division block 103, image signal transformation block 104, tone transformation characteristics calculation block 105 and tone transformation processing block 106, respectively, as is the case with the invention (1).

According to the imaging apparatus of the invention (10), the time taken for tone transformation processing can be curtailed as in the invention (1).

(11) According to the 11th aspect of the invention, the aforesaid invention (10) is further characterized by further comprising a transformation processing implementing means for judging whether or not image transformation processing by said first transformation means is to be implemented on the basis of a taking condition when an image for forming said image signal is taken, wherein said transformation processing implementing means judges that image transformation processing by said first transformation means is to be implemented, image transformation processing by said first transformation processing is implemented.

The invention (11) is carried out in the second embodiment shown in Figs. 3 and 4. The transformation processing implementing means for judging whether or not image transformation processing by said first transformation means is to be implemented on the basis of a taking condition when an image for forming said image signal is taken is equivalent to the tone processing judgment block 200.

With the imaging apparatus of the invention (11), the optimum processing speed is obtainable as in the invention (7).

(12) According to the 12th aspect of the invention, the aforesaid invention (10) is further characterized by further comprising a transformation processing implementing means for judging whether or not image transformation processing by said first transformation means is to be implemented on the basis of a order from a user, wherein when said transformation processing implementing means judges that image transformation processing by said first transformation means is to be implemented, image transformation processing by said first transformation means is implemented.

The invention (12) is carried out in the second embodiment shown in Figs. 3 and 4. The transformation processing implementing means for judging whether or not image transformation processing by said first transformation means is to be implemented on the basis of a order from a user is equivalent to the tone processing judgment block 200 shown in Fig. 3. With the imaging apparatus of the invention (12), the optimum processing speed is obtainable with a high degree of flexibility, as in the invention (8).

(13) According to the 13th aspect of the invention, there is an image processing program provided, which is characterized by letting a computer implement steps of reading an image signal therein, dividing said image signal into at least one zone or zones, applying image transformation processing to an image signal corresponding to said zone for each said zone, determining transformation characteristics for image transformation processing applied to said image signal, and applying tone transformation processing to each said zone using said transformation characteristics determined at said transformation characteristics determination means.

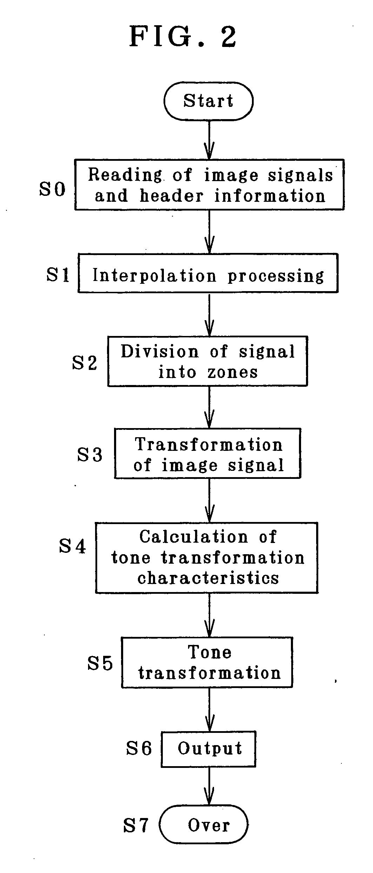

The invention (13) is carried out according to the flowchart for the first embodiment shown in Fig. 2. The step of reading the image signal is equivalent to the step S0; the step of dividing said image signal into at least one zone or zones to the step S2; the step of applying image transformation processing to an image signal corresponding to said zone for each said zone to the step S3; the step of determining transformation characteristics for image transformation processing applied to said image signal to the step S4; and the step of applying tone transformation processing to each said zone using said transformation characteristics determined at said transformation characteristics determination means to the step 5.

(14) According to the 14th aspect of the invention, the aforesaid invention (13) is further characterized by further comprising a transformation processing implementing step of judging whether or not said image transformation processing is to be implemented on the basis of a taking condition when an image for forming said image signal is taken. The invention (14) is carried out according to the flowchart for the second embodiment shown in Fig. 4. The transformation processing implementing step of judging whether or not said image transformation processing is to be implemented on the basis of a taking condition when an image for forming said image signal is taken is equivalent to the step S12.

(15) According to the 15th aspect of the invention, the aforesaid invention (13) is further characterized by further comprising a transformation processing implementing step of judging whether or not said image transformation processing is to be implemented on the basis of an order from a user. The invention (15) is carried out according to the flowchart for the second embodiment shown in Fig. 4. The transformation processing implementing step of judging whether or not said image transformation processing is to be implemented on the basis of an order from a user is equivalent to the step S12.

According to the inventions (13), (14) and (15), the tone transformation processing applied to an image signal divided into at least one zone or zones for each zone can accurately and rapidly be implemented on software. Each invention is convenient because in an environment with a computer installed in it, the tone transformation processing could be implemented irrespective of time and place.

In accordance with the invention wherein flexible tone transformation processing is applied to image signals depending on the characteristics of the divided image areas, it is possible to provide an image processor and imaging apparatus capable of curtailing tone transformation processing time as well as an image processing program.

BRIEF DESCRIPTION OF THE DRAWINGS

Fig. 1 is illustrative of the arrangement of the first embodiment.
Fig. 2 is a flowchart for the first embodiment.
Fig. 3 is illustrative of the arrangement of the second embodiment.
Fig. 4 is a flowchart for the second embodiment.
Fig. 5 is a hue correlation diagram for the extraction of a flesh color hue.
Fig. 6 is illustrative of the arrangement of the signal division block.
Fig. 7 is illustrative of the arrangement of the image signal conversion block.
Fig. 8 is illustrative of the arrangement of the characteristics calculation block.

BEST MODE FOR CARRYING OUT THE INVENTION

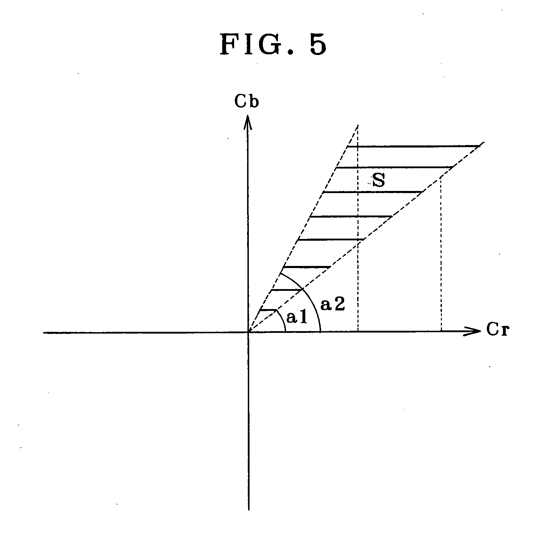

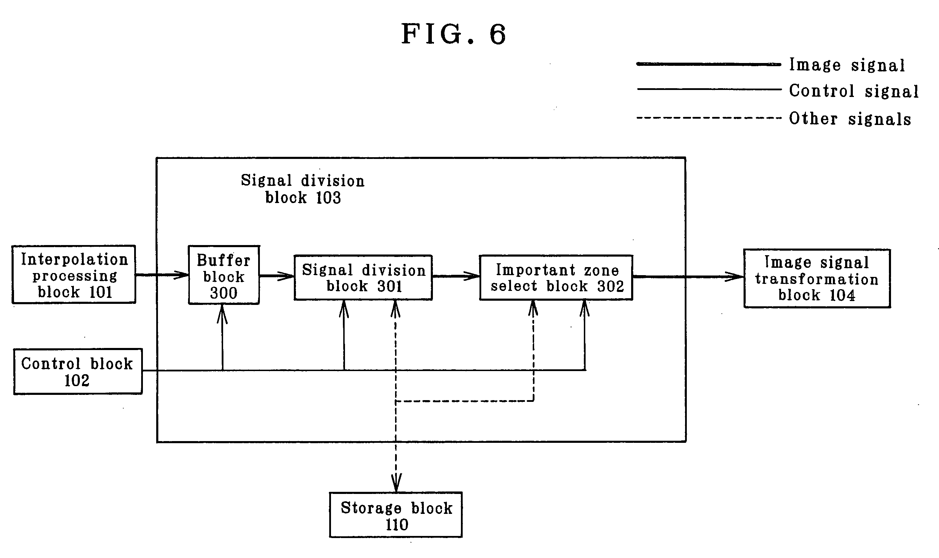

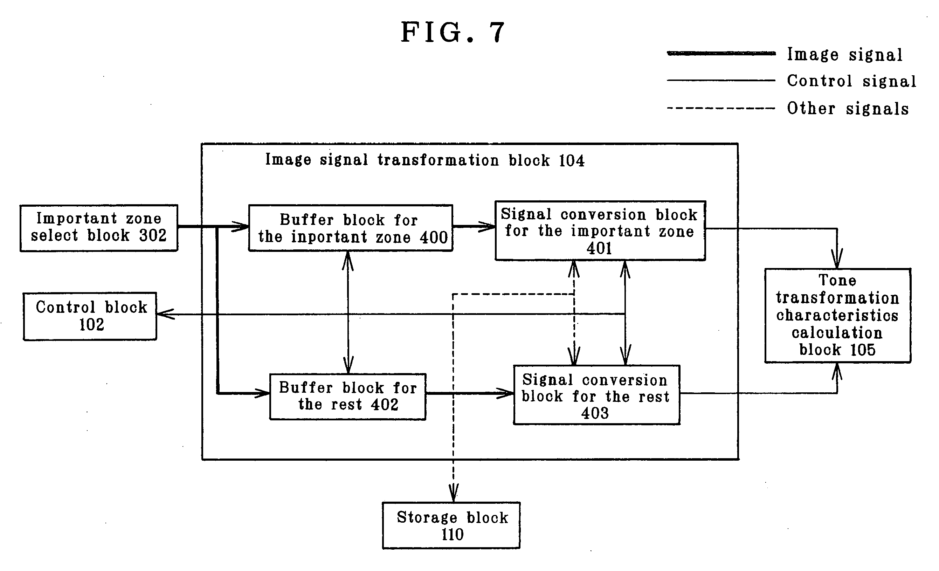

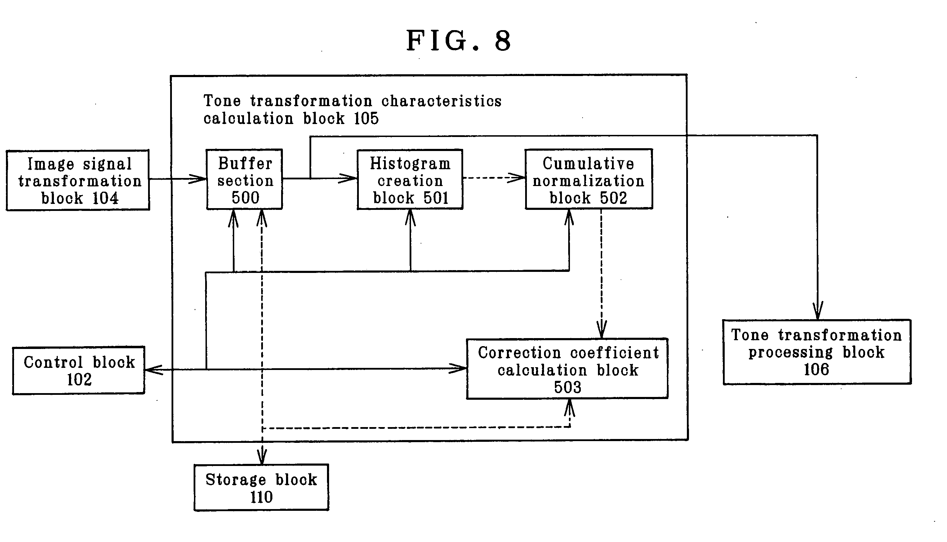

The first embodiment of the invention is now explained with reference to the drawings. Fig. 1 is illustrative of the arrangement of the first embodiment; Fig. 2 is a flowchart for the first embodiment; Fig. 5 is a hue correlation diagram for the extraction of a flesh color hue; Fig. 6 is illustrative of the arrangement of the signal division block 103; Fig. 7 is illustrative of the arrangement of the image signal conversion block 104; and Fig. 8 is illustrative of the arrangement of the characteristics calculation block 105.

Fig. 1 is illustrative of the arrangement of the first embodiment comprising the inventive imaging apparatus 10. An image taken via a lens system·stop 111 and a CCD 112 is converted at an A/D 113 into a digital signal. An image signal from the A/D 113 is forwarded to an interpolation processing block 101. The interpolation processing block 101 is connected to a signal division block 103 and a tone transformation processing block 106. The signal division block 103 is connected to an output block 108 via the image signal conversion block 104, a tone transformation characteristics calculation block 105 and a tone transformation processing block 106.

A storage block 110 is bidirectionally connected to the signal division block 103, image signal conversion block 104, tone transformation characteristics calculation block 105 and tone transformation processing block 106. A control block 102 is bidirectionally connected to the interpolation processing block 101, signal division block 103, image signal conversion block 104, tone transformation characteristics calculation block 105, tone transformation processing block 106, output block 108, storage block 110 and A/D 113. An external I/F block 109 comprising an interface such as a parameter input, too, is bidirectionally connected to the control block 102.

For each processing at the interpolation processing block 101, control block 102, signal division block 103, image signal conversion block 104, tone transformation characteristics calculation block 105, tone transformation processing block 106, output block 108, external I/F block 109, storage block 110 and A/D 113, a CPU mounted on the imaging apparatus 10 implements it on the basis of an image signal processing program stored in an ROM or other memory while the necessary data are optionally read out of or written in an RAM or other storage.

The flow of signals in Fig. 1 is now explained. The user sets via the external I/F 109 taking conditions such as the setting of a taking mode, the setting of autofocusing, the setting of ISO sensitivity, and the setting of a shutter speed. Included in the embodiment here are taking modes as represented by automatic photography, scene photography, portrait photography, close-up photography, night scene photography, and stroboscopic flash photography; however, the taking modes are not limited to them. The imaging apparatus 10 may just as well have other taking modes set on condition that while the situation of the subject to be taken (taking scene) is taken into various considerations, combinations of ISO sensitivity, shutter speed, stop, etc. that seem to be suitable in various situations are preset, or what is processed of image signals is preset.

It is here noted that the automatic photography refers to the mode of photography where the user photographs subjects irrespective of what state they are in; it is the photographic mode of the imaging apparatus 10 taking the image of the subject while making an automatic estimation of its situation. The scene photography is the taking mode aiming at taking landscapes, and the portrait photography is the taking mode aiming at photographing figures. The close-up photography is the taking mode aiming at photographing subjects in close-up range; the night scene photography is the taking mode aiming at photographing subjects in dark places; and the stroboscopic flash photography is the taking mode aiming at implementing photography with the strobo flashed.

The thus set taking conditions are stored in the storage block 110. Afterwards, as the user gives a push on a shutter button, it permits the image signal taken via the lens system·stop 111 and CCD 112 to be read by correlated double sampling as an analog signal. This analog signal is converted at the A/D 113 into a digital image signal that is in turn forwarded to the interpolation processing block 101. In the embodiment here, the CCD 112 is supposed to be a single-chip CCD of the RGB primary colors type, and the signal converted at the A/D 113 is supposed to have a tone width of for instance 12 bits. On the basis of control by the control block 102, the interpolation processing block 101 implements forwarding the image signal to the signal division block 103 and tone transformation processing block 106.

Fig. 6 is illustrative of one exemplary arrangement of the signal division block 103. The signal division block 103 comprises a buffer block 300, a division processing block 301 and an important zone select block 302. The interpolation processing block 101 is connected to the image signal conversion block 104 via the buffer block 300, division processing block 301 and important zone select block 302. The control block 102 is bidirectionally connected to the buffer block 300, division processing block 301 and important zone select block 302. The storage block 110 is bidirectionally connected to the division processing block 301 and important zone select block 302.

In the embodiment here, the three-chip RGB image signal forwarded from the interpolation processing block 101 is stored in the buffer block 300. The control block 102 stores in a storage block 110 the number of zones designated by the user via the external I/F 109. The division processing block 301 divides the total image signal uniformly into multiple zones according to the number of zones stored in the storage block 110; that is, the digital image signal is divided for each set of pixel values corresponding to each zone, so that an image represented by the digital image signal is divided into multiple zones. Note here that the division processing block 301 may be such that the number of zones is 1. Further, the important zone select 301 selects a zone of much more importance out of the zones, forwarding to the image signal conversion block 104 an image signal corresponding to the important zone and an image signal corresponding to the rest.

The zone of much more importance here, selected out by the important zone select block 302, is corresponding to that designated and selected by the user out of the zones. In the embodiment here, the zone of much more importance is designated by the user from the zones via the external I/F block 109. The important zone select block 302 selects the zone designated by the user as that of much more importance. The selection of the zone of much more importance designated by the user may otherwise be implemented, too. For instance, the division processing block 301 divides the taken image into zones according to the range in which the user focuses by use of the external I/F block 109 at the taking time and the rest. And the important zone select block 301 judges the focused range as being a zone in focus, so that the zone in focus can be automatically selected as the zone of much more importance designated by the user.

The signal division block 103 may just as well divide the image signal into zones on the basis of information of the image signal of the taken image. The information of the image signal includes information about the color, shape, etc. of the subject obtained from the image signal. When the image signal is divided on the basis of the information of the image signal, the division processing block 301 divides the image signal using a parameter stored in the storage block 110. For instance, a hue table for CR, Cb, and data preset for a flesh color hue may have been registered in the storage block 110. The division processing block 301 recognizes the flesh color from the information of the image signal, dividing the image signal into an image signal corresponding to the flesh color area and an image signal corresponding to the rest. The division processing block 301 then figures out color difference signals Cr, Cb for each pixel by YCrCb separation processing on the basis of control by the control block 102 according to the following equation.

$$Cr = b1*R+b2*G+b3*B$$

$$Cb = b4*R+b5*G+b6*B \qquad \cdots (1)$$

where b1 to b6 are constants.

Then, the constituting angle A of the hue is calculated according to equation (2).

$$A = arctg \ (Cb/Cr) \qquad \cdots (2)$$

where arctg is a function for giving back the arc tangent.

The thus calculated constituting angle A is compared with the data on the Cr, Cb hue table stored in the storage block 110 comprising an ROM to judge whether or not the hue is a flesh color. Fig. 5 is a hue correlation diagram for the extraction of the flesh color hue. As shown in Fig. 5, if the color signals Cr, Cb per pixel comes under the an area S representative of the flesh color hue in the Cr-Cb plane, then that pixel is judged to have a flesh color hue from inequality (3). At the important zone select block 302, the image area comprising pixels judged by the division processing block 301 to have a flesh color hue is extracted as the zone of much more importance.

$$a1<A<a2 \qquad \cdots (3)$$

Here a1 and a2 are each a constant.

Reference has been made to the embodiment wherein the image signal is divided on the basis of the information on the flesh color of the subject obtained from the image signal; however, the image signal may as well be divided on the basis of information on another color of the subject, as is the case with the flesh color. When the image signal is divided on the basis of information on the shape of the subject, the division processing block 301 may use template matching detection means to extract an area having a specific shape (pattern). Then, at the important zone select block 302, the area judged at the division processing block 301 to have a specific shape (pattern) may be extracted as the zone of much more importance.

Besides, the image signal may be divided using edge strength as the information of the image signal of the taken image. In that case, an edge is extracted from the image signal, and a pixel having strong edge strength is used as a pixel corresponding to the focused portion. And, at the division processing block 301, a pixel in the predetermined range is extracted from pixels corresponding to the focused portion as a focused zone. Then, the image signal is divided into an image signal corresponding to the focused zone and an image signal corresponding to the rest. And, at the important zone select block 302, the focused zone is extracted as the zone of much more importance.

Fig. 7 is illustrative of one exemplary arrangement of the image signal conversion block 104. The image signal conversion block 104 comprises a buffer block 400 for the important zone, a signal conversion block 401 for the important zone, a buffer block 402 for other zones and a signal conversion block 403 for other zones. The important zone select block 302 is connected to the buffer block 400 for the important zone and the buffer block 402 for other zones. The buffer block 400 for the important zone is connected to the signal conversion block 401 for the important zone. The buffer block 402 for other zones is connected to the signal conversion block 403 for other zones. The signal conversion block 401 for the important zone and the signal conversion block 403 for other zones are connected to the tone transformation characteristics calculation block 105. The control block 102 is bidirectionally connected to the buffer block 400 for the important zone, the signal conversion block 401 for the important zone, the buffer block 402 for other zones and the signal conversion block 403 for other zones. The storage block 110 is bidirectionally connected to the signal conversion block 401 for the important zone and the signal conversion block 403 for other zones.

To decrease the amount of data in calculating the tone transformation characteristics, the image signal conversion block 104 applies image signal conversion processing (image reduction processing, processing for estimating a representative, etc.) to the image signal for each zone forwarded from the signal division block 103. Thus, the amount of decrease in the amount of data in calculating the tone transformation characteristics is decreased (possibly down to zero) for the zone of much more importance, and the amount of decrease in that amount of data is increased for other zones than the zone of much more importance.

As the zone of much more importance is selected out by the signal division block 103 as described above, it permits the image signal conversion block 104 to store in the buffer bock 400 for the important zone an image signal for the zone of much more importance designated by the user on the basis of the image signal forwarded from the important zone select block 302 or an image signal for the zone of much more importance selected out on the basis of the taken image, and store image signals for other zones in the buffer block 402 for other zones.

On the basis of control by the control block 102, the signal conversion block 401 for the important zone applies reduction processing to the image signal for the zone of much more importance from the buffer block 400 for the important block at the first reduction rate. On the basis of control by the control block 102, the signal conversion block 403 for other zones applies reduction processing to the image signal from the buffer block 402 for other zone at the second reduction rate. The first, and the second reduction rate, indicative of the degree of decrease in the amount of data in the image signal, are set by the user via the external I/F block 109 and so stored in advance in the storage block 110. The first reduction rate here is set larger than the second reduction rate. The first reduction rate may be set at 1. It is noted that if the first and the second reduction rate are provided in some numbers, it is then possible to designate a different reduction rate independently to a different zone.

The first and the second reduction rate may as well be determined depending on the kind of the taking mode. For instance, combinations of the first and the second reduction rate determined depending on whether the taking mode is automatic, scene, portrait, close-up, night scene or stroboscopic flash photography may have been stored in the storage block 110. Then, the taking mode set at the taking time is read out of the storage block 110 to apply reduction processing to the image signals at the first and second reduction rates depending on the taking mode set at the taking time.

The reduction rate may also be determined depending on the taken image. For instance, combinations of the first and the second reduction rate depending on the intensity of edge strength, spatial frequency, luminance, color, etc. concerning image signals may have been stored in the storage block 110. Then, reduction processing is applied to the image signals at the first and the second reduction rate depending on information about the intensity of edge strength, spatial frequency, luminance, color, etc. across the image, all figured out of the image signal. Further, reduction processing may be applied to image signals at the first and the second reduction rate depending on information such as the intensity of edge strength, spatial frequency, luminance, and color, all figured out for each image signal corresponding to each zone.

Referring to the reduction processing, when the image reduction rate is for instance 1/4, an R image signal, a G image signal, and a B image signal is each divided into multiple blocks, each comprising $4\times4$ pixels. Then, $4\times4$ low-pass filters are read from the storable block 110. Then, the read $4\times4$ low-pass filters are applied to the image signal for each block comprising $4\times4$ low-pass filters to figure out a pixel value representative of each block. Through the foregoing processing, the image signal is represented by the calculated pixel value, and reduced down to 1/4. Finally, a luminance signal is calculated with respect to the image signal for each reduced zone from equation (4).

$$Y = b7*R+b8*G+b9*B \qquad\qquad \cdots(4)$$

Here b7, b8 and b9 each are a constant, and Y is a luminance signal.

As the image signal conversion processing by the image signal conversion block 104 is implemented, it permits the image signal for the important zone to be forwarded from the signal conversion block 401 for the important zone to the tone transformation characteristics calculation block 105, and the image signals for other zones to be forwarded from the signal conversion block 403 for other zones to the tone transformation characteristics calculation block 105.

At the tone transformation characteristics calculation block 105, tone transformation characteristics are figured out for the luminance signal of each zone forwarded through the control block 102. The calculation of tone transformation characteristics, for instance, may be implemented as set forth in the aforesaid Patent Publication 1. First, for each zone, a density histogram is prepared for each zone, and to what degrees the density value of that density histogram varies is figured out. Then, depending on the degree of variation of that density value, there is a clip value determined which governs the degree of smoothness of that density histogram. Then, that density histogram is clipped at that clip value to create a cumulative histogram from the density histogram after clipping. Finally, the cumulative histogram is applied as a density transformation curve to each pixel or area of the entered image signal to determine a correction coefficient for tone transformation, thereby figuring out the tone transformation characteristics. On the basis of the histogram for each zone, the correction coefficient is figured out.

At the characteristics calculation block 105, the correction coefficient to be applied to all zones is thus figured out. For the zone (image signal) subjected to reduction processing at the image signal conversion block 104, the calculated correction coefficient is going to correspond to the reduced zone (image signal). For this reason, the characteristics calculation block 105 applies extension to the calculated correction coefficient at the same rate as the reduction rate applied to each zone for processing at the image signal conversion block 104. This way, the correction coefficient corresponding to each pixel of the original image is created and stored in the storage block 110.

On the basis of control by the control block 102, the tone transformation processing block 106 reads from the storage block 110 the correction coefficient figured out by processing at that characteristics calculation block 105, and multiplies each pixel of the image signal (R image signal, G image signal, and B image signal) from the interpolation processing block 101 by the correction coefficient, thereby implementing tone transformation processing. The image signal after the tone transformation processing is subjected to compression processing such as JPEG before forwarded to the output block 108. At the output block 108, the image signal is recorded and stored in a memory card or the like.

Among possible other means for decreasing the amount of data in figuring out the tone transformation characteristics, there is a method wherein the luminance signal for the zone of much more importance is calculated from equation (4) without decreasing the amount of data, while a representative is estimated for the rest. The representative here, for instance, refers to an average, a maximum value or the like in the zone. In this case, at the characteristics calculation block 105, the correction coefficient is figured out only for the zone of much more importance. Then, the calculated correction coefficient and the representative per se for the rest are forwarded to the tone transformation processing block 106. On the basis of control by the control block 102, the tone transformation processing block 106 applies space variant tone transformation (where the tone transformation characteristics are variable independently for each pixel or each zone) to the zone of much more importance, using the correction coefficient. For the rest, a transform table for corresponding space invariant tone transformation processing (where the tone transformation characteristics are independently invariable for each pixel or each zone) is extracted out of the storage unit 110, and tone transformation processing is applied to them.

Fig. 8 is illustrative of one exemplary arrangement of the tone transformation characteristics calculation block 105. The characteristics calculation block 105 comprises a buffer block 500, a histogram creation block 501, a cumulative normalization block 502, and a correction coefficient calculation block 503. The image signal conversion block 104 is connected to the buffer block 500. The buffer block 500 is connected to the histogram creation block 501 and tone transformation processing block 106. The histogram creation block 501 is connected to the cumulative normalization block 502. The cumulative normalization block 502 is connected to the correction coefficient calculation block 503. The control block 102 is bidirectionally connected to the buffer block 500, histogram creation block 501, cumulative normalization block 502 and correction coefficient calculation block 503. The storage block 110 is bidirectionally connected to the buffer block 500 and correction coefficient calculation block 503.

The luminance signal for each zone forwarded from the image signal conversion block 104 is stored in the buffer block 500. The histogram creation block 501 creates a density histogram for each zone, forwarding it to the cumulative normalization block 502. The cumulative normalization block 502 first figures out to what degrees the density value of the density histogram varies for each zone. Then, depending on the degree of that variation, there is a clip value determined which governs the degree of smoothness of that density histogram. Further, that density histogram is clipped at that clip value so that the cumulative histogram is created for the density histogram after clipping. Then, the cumulative histogram is normalized in tune with tone width, thereby making an estimation of a tone transformation curve indicative of tone transformation characteristics.

In the embodiment here, the tone width of the image signal is supposed to be 12 bits; that tone transformation curve is going to be a 12-bit output at a 12-bit input. The correction coefficient calculation block 503 figures out a correction coefficient for each pixel or each area on the basis of the estimated tone transformation curve. The correction coefficient is the quotient of the output value divided by the input value. In the embodiment here, the image signal is divided into image signals for multiple zones so that the correction coefficient used for tone transformation processing can be figured out at fast speeds, because there is no or little decrease in the amount of data in the calculation of tone transformation characteristics for the zone of much more importance, and the amount of decrease in the amount of data for the rest can be increased.

Further, space variant tone transformation processing can be implemented using the calculated correction coefficient for tone transformation processing; image signals preferable for the user can quickly be obtained. On the other hand, when the representative for other zones than that of much more importance is estimated and space invariant tone transformation processing is implemented using a transform table, too, there is quick image signal processing achievable.

In the aforesaid embodiment of the invention using the imaging apparatus 10 comprising imaging means comprising the lens system.stop 111 and CCD 112 as shown in Figs. 1 and 3, an image taken by that imaging means is converted at the A/D 113 into digital image signals to which tone transformation processing is applied. However, the invention is never limited to the tone transformation processing for digital images in such imaging apparatus. For instance, the aforesaid imaging means may be removed from the imaging apparatus 10; the present invention may as well be applied to an image processor adapted to apply tone transformation processing to digital image signals stored in storage means. In this case, the arrangement comprising the aforesaid imaging means and A/D 113 is going to be replaced with suitable storage means. For instance, signals from the CCD 112 may be produced as unprocessed or raw data, and information from the control block 102 at the taking time may be produced as header information for processing on another image processor.

Fig. 2 is a flowchart for the image processing program on which the aforesaid processing in the first embodiment of the invention is run by the imaging apparatus 10 or image processor.

At step S0, header information including image signals and taking information from the imaging device is read. At step S1, single-chip image signals are converted by the interpolation processing block 101 into three-chip image signals. At step S2, as designated by the user or on the basis of information of the taken image, the image signal is divided by the signal division block 103 into multiple zones. The number of division here may be set at 1. At step S3, transformation processing for the image signal is applied by the image signal conversion block 104 to the multiple zones. The transformation processing for the image signal, for instance, may be implemented in a reduction processing form at a designated reduction rate. At step S4, tone transformation characteristics for the image signal for each zone is figured out by the characteristics calculation block 105 on the basis of the image signal after the image signal conversion processing. At step S5, tone transformation processing is applied by the tone transformation processing block 106 to each zone on the basis of the tone transformation characteristics figured out at step S4. At step S6, output processing is implemented. The output processing, for instance, involves recording and storing the image signals in a memory card or the like. At step S7, the tone transformation processing for the image signals in the embodiment here is over.

The second embodiment of the invention is now explained. Fig. 3 is illustrative of the arrangement of the second embodiment; Fig. 4 is a flowchart illustrative of processing steps in the second embodiment; and Figs. 5-8 are illustrative, as in the first embodiment, of the arrangement of the second embodiment.

Fig. 3 is illustrative of the arrangement of the second embodiment, showing the arrangement that the imaging apparatus 20 has. An image taken via the lens system.stop 111 and CCD 112 is converted at the A/D 113 into a digital signal. An image signal from the A/D 113 is forwarded to the interpolation processing block 101. The interpolation processing block 101 is connected to a tone processing assessment block 200 and the tone transformation processing block 106. The tone processing assessment block 200 is connected to the signal division block 101. The signal division block 103 is connected to the output block 108 via the image signal conversion block 104, tone transformation characteristics calculation block 105 and tone transformation processing block 106.

The storage block 110 is bidirectionally connected to the tone processing assessment block 200, signal division block 103, image signal conversion block 104, tone transformation characteristics calculation block 105 and tone transformation processing block 106. The control block 102 is bidirectionally connected to the interpolation processing block 101, tone processing assessment block 200, signal division block 103, image signal conversion block 104, tone transformation characteristics calculation block 105, tone transformation processing block 106, output block 108, storage block 110 and A/D 113. The external I/F block 109 comprising an interface such as a parameter input, too, is bidirectionally connected to the control block 102.

For each processing at the interpolation processing block 101, control block 102, signal division block 103, image signal conversion block 104, tone transformation characteristics calculation block 105, tone transformation processing block 106, output block 108, external I/F block 109, storage block 110, A/D 113 and tone processing assessment block 200, a CPU mounted on the imaging apparatus 20 implements it on the basis of an image signal processing program stored in an ROM or other memory while the necessary data are optionally read out of or written in an RAM or other storage.

The flow of signals in Fig. 3 is now explained. In the arrangement of Fig. 3, like components as in the arrangement of Fig. 1 are indicated by like numerals; only the differences with the Fig. 1 are now explained. On the basis of control by the control block 102, the interpolation processing block 101 forwards image signals to the tone processing assessment block 200. On the basis of the taking condition or information of the image signal of the image designated or taken by the user, the tone processing assessment block 200 makes an assessment of whether or not space variant tone transformation ((where the tone transformation characteristics are varable independently for each pixel or each zone) is applied to the image signal forwarded from the interpolation processing block 101.

When the tone processing judgment block 200 judges whether or not the space variant tone transformation is to be implemented depending on the taking condition, the taking condition is compared with the judgment condition stored in the storage block 110 as to whether or not there is a match, thereby making an automatic judgment of whether or not the space variant tone transformation is to be implemented. For instance, a table as to whether or not tone transformation is to be implemented one-to-one depending on each taking mode may have been stored in the storage block 110. For judgment, reference is made to the table stored in the storage block 110 using the taking mode for the taken image as a key to check whether or not the space variant tone transformation is to be implemented.

For instance, that table is preset the way space variant tone transformation processing is applied to the image of a figure taken in the portrait photography mode (in order to clearly render the image of the figure), no space variant tone transformation processing is applied to an image taken in the night scene photography mode (because space variant tone transformation would enhance noises at shades at the same time), and so on.

For the judgment of whether or not space variant tone transformation is to be implemented on the basis of a user's order, an input from the external I/F block 109 as ordered by the user is converted into a control signal for the control block 102. Then, the control signal is entered into the tone processing judgment block 200 to let it judge whether or not space variant tone transformation is to be implemented.

Further, when whether or not space variant tone transformation is to be implemented on the basis of the information of the image signal, judgment information for the image is read out of the storage block 110 on the basis of control by the control block 102 to compare it with the image information, thereby judging whether or not space variant tone transformation is to be implemented. For instance, a pattern judged as a figure may have been stored in the storage block 110. When a judgment is formed of whether or not space variant tone transformation is to be implemented, the figure pattern is extracted from the storage block 110, and whether or not there is a target fit to the extracted figure pattern in the image is checked by the template matching method or the like for the image signal. When there is the target, space variant tone transformation is implemented, and when there is no target, space invariant tone transformation processing is implemented.

After that, the tone processing judgment block 200 finally transmits to the control block the result of judgment of whether or not space variant processing is to be implemented. When the tone processing judgment block 200 judges that space variant tone transformation is to be implemented, the control block 102 controls the respective processing blocks such that the same processing as in the first embodiment takes places. On the other hand, when the block 200 judges that space variant tone transformation is to be not implemented, the control block 102 stops processing at the signal division block 103, image signal conversion block 104 and tone transformation characteristics calculation block 105 and, instead, lets the tone transformation processing block 106 implement space invariant tone transformation processing (where the tone transformation characteristics are independently invariable for each pixel or each zone).

The tone transformation characteristics in this case are held in the tone transformation processing block 106. Irrespective of whether tone transformation is space variant or space invariant, the tone transformation processing block 106 forwards the result of processing to the output block 108. In the embodiment here wherein image signal processing is implemented on the basis of the judgment of whether or not space variant tone transformation is to be implemented depending on the taking situation, the degree of flexibility in processing grows high, which also leads to an increased processing speed and efficiency. In the embodiment here, too, tone transformation processing may be applied to not only the imaging apparatus 20 but also to an image processor, as in the first embodiment.

Fig. 4 is a flowchart concerning the image processing program on which the aforesaid processing of the second embodiment of the invention is run by the imaging apparatus 20 or an image processor.

At step S10, header information including image signals and taking information from the imaging device is read. At step S11, single-chip signals are converted by the interpolation processing block 101 into three-chip image signals. At step S12, whether or not space variant transformation processing is necessary is judged by the tone processing judgment block 200 on the basis of a user's order, taking conditions or image information. If space variant tone transformation processing is necessary (the result of the judgment is Yes), the processing operation goes to step S13. If space variant tone transformation processing is unnecessary (the result of the judgment is No), the processing operation goes to step S16.

At step S13, division processing for dividing the image signal into multiple zones is implemented by the signal division block 103 on the basis of the user's order or the information of the taken image. Here the number of division may be 1. At S14, the transformation processing for the image signal is applied by the image signal transformation block 104 to the zones. The transformation processing for the image signal is implemented in the form of reduction processing, for instance, at a designated reduction rate. At step S15, the tone transformation characteristics for the image signal per zone are figured out by the characteristics calculation block 105 on the basis of the image signal after subjected to image signal transformation processing. At step S16, tone transformation processing is applied by the tone transformation processing block 106 to each zone on the basis of the tone transformation characteristics figured out at step S15. When step S12 judges that space variant tone transformation is unnecessary, space invariant tone transformation processing is applied by the tone transformation processing block 106 to the total image signal. At step S17, output processing is implemented to record and store images signals in for instance a memory card. At step S18, the tone transformation processing of the image signal here is over.

POSSIBLE APPLICATIONS TO THE INDUSTRY

According to the invention as described above, it is possible to provide an image processor and imaging apparatus capable of curtailing tone transformation processing time. It is also possible to provide an image processing program on which tone transformation processing can be run precisely and rapidly.

**Claims**

1.   An image processor adapted to apply tone transformation processing to an image signal,
**characterized by** comprising a signal division means for dividing said image signal into at least one zone or zones, a first transformation means for applying image transformation processing to an image signal corresponding to said zone for each said zone, a transformation characteristics determination means for determining transformation characteristics for tone transformation processing applied to said image signal on the basis of an image signal generated at said first transformation means, and a second transformation means for applying tone transformation processing to said image signal for each said zone using said transformation characteristics determined at said transformation characteristics determination means.

2.   The image processor according to claim 1,
**characterized in that** said signal division means divides said image signal into at least one zone or zones on the basis of information of said image signal.

3.   The image processor according to claim 1,
**characterized by** further comprising a kind-of-division reception means for receiving from a user a designation of in what kind said image signal is divided by said signal division means into at least one zone or zones, wherein said signal division means divides said image signal into at least one zone or zones on the basis of the designation of the kind of division received at said kind-of-division reception means.

4.   The image processor according to claim 1,
**characterized in that** said first transformation means applies image transformation processing to said image signal such that there is a decrease in an amount of data corresponding to at least one zone of said at least one zone or zones.

5.   The image processor according to claim 1,
**characterized by** further comprising a degree-of-decrease reception means for receiving from a user a designation as to a degree of decrease in an amount of data in applying image transformation processing to said image signal by said first transformation means such that there is a decrease in the amount of data, wherein said first transformation means applies image transformation processing to said image signal such that there is a decrease in the amount of data on the basis of the degree of decrease received at said degree-of-decrease reception means.

6.   The image processor according to claim 1,
**characterized in that** said first transformation means figures out a representative for at least one zone of said at least one zone or zones from said image signal, thereby applying image transformation processing to said image signal such that there is a decrease in the amount of data corresponding to said zone.

7.   The image processor according to claim 1,
**characterized by** further comprising a transformation processing implementing means for judging whether or not image transformation processing by said first transformation means is to be implemented on the basis of a taking condition when an image for forming said image signal is taken, wherein when said transformation processing implementing means judges that image transformation processing by said first transformation means is to be implemented, image transformation processing by said first transformation processing is implemented.

8. The image processor according to claim 1,
**characterized by** further comprising a transformation processing implementing means for judging whether or not image transformation processing by said first transformation means is to be implemented on the basis of a order from a user, wherein when said transformation processing implementing means judges that image transformation processing by said first transformation means is to be implemented, image transformation processing by said first transformation means is implemented.

9. The image processor according to claim 1,
**characterized by** further comprising a transformation processing implementing means for judging whether or not image transformation processing by said first transformation means is to be implemented on the basis of information of the image signal, wherein when said transformation processing implementing means judges that image transformation processing by said first transformation means is to be implemented, image transformation processing by said first transformation means is implemented.

10. An imaging apparatus comprising an imaging means and adapted to apply tone transformation processing to an image signal obtained from an image taken by said imaging means, **characterized by** further comprising a signal division means for dividing said image signal into at least one zone or zones, a first transformation means for applying image transformation processing to an image signal corresponding to said zone for each said zone, a transformation characteristics determination means for determining transformation characteristics for tone transformation processing applied to an image signal generated at said first transformation means, and a second transformation means for applying tone transformation processing to said image signal for each said zone using said transformation characteristics determined at said transformation characteristics determination means.

11. The imaging apparatus according to claim 10,
**characterized by** further comprising a transformation processing implementing means for judging whether or not image transformation processing by said first transformation means is to be implemented on the basis of a taking condition when an image for forming said image signal is taken, wherein said transformation processing implementing means judges that image transformation processing by said first transformation means is to be implemented, image transformation processing by said first transformation processing is implemented.

12. The imaging apparatus according to claim 10,
**characterized by** further comprising a transformation processing implementing means for judging whether or not image transformation processing by said first transformation means is to be implemented on the basis of a order from a user, wherein when said transformation processing implementing means judges that image transformation processing by said first transformation means is to be implemented, image transformation processing by said first transformation means is implemented.

13. An image processing program, letting a computer implement steps of reading an image signal therein, dividing said image signal into at least one zone or zones, applying image transformation processing to an image signal corresponding to said zone for each said zone, determining transformation characteristics for image transformation processing applied to said image signal, and applying tone transformation processing to each said zone using said transformation characteristics determined at said transformation characteristics determination means.

14. The image processing program according to claim 13, **characterized by** further comprising a transformation processing implementing step of judging whether or not said image transformation processing is to be implemented on the basis of a taking condition when an image for forming said image signal is taken.

15. The image processing program according to claim 13, **characterized by** further comprising a transformation processing implementing step of judging whether or not said image transformation processing is to be implemented on the basis of an order from a user.

# FIG. 1

Lens system, stop
111

CCD
112

$\underline{10}$

——————— Image signal
——————— Control signal
------------ Other signals

A/D
113

Interpolation
processing
block 101

Signal
division
block 103

Image signal
transformation
block 104

Tone
transformation
characteristics
calculation
block 105

Tone transformation
processing block
106

Storage block
110

Control block
102

External
I/F block
109

Output
block 108

EP 1 871 094 A1

# FIG. 2

Start

↓

S0 | Reading of image signals and header information

↓

S1 | Interpolation processing

↓

S2 | Division of signal into zones

↓

S3 | Transformation of image signal

↓

S4 | Calculation of tone transformation characteristics

↓

S5 | Tone transformation

↓

S6 | Output

↓

S7 ( Over )

# FIG. 3

**Image signal** (thick line)
**Control signal** (thin line)
**Other signals** (dashed line)

Lens system, stop
111

CCD
112

20

A/D
113

Interpolation
processing
block 101

Tone processing
judgment block
200

Signal
division
block 103

Image signal
transformation
block 104

Tone
transformation
characteristics
calculation
block 105

Storage block
110

Control block
102

External
I/F block
109

Tone
transformation
processing
block 106

Output
block 108

# FIG. 4

```
                    ┌─────────┐
                    │  Start  │
                    └─────────┘
                         │
                         ▼
        ┌─────────────────────────────┐
   S10  │ Reading of image signals    │
        │ and header information      │
        └─────────────────────────────┘
                         │
                         ▼
   S11  ┌─────────────────────────────┐
        │  Interpolation processing   │
        └─────────────────────────────┘
                         │
                         ▼
   No              ◇ Is space
  ◄────── variant tone transformation
                    necessary?
             S12
                         │ Yes
                         ▼
   S13  ┌─────────────────────────────┐
        │  Division of signal into zones │
        └─────────────────────────────┘
                         │
                         ▼
   S14  ┌─────────────────────────────┐
        │ Transformation of image signal │
        └─────────────────────────────┘
                         │
                         ▼
        ┌─────────────────────────────┐
        │       Calculation of        │
   S15  │   tone transformation       │
        │      characteristics        │
        └─────────────────────────────┘
                         │
                         ▼
        ┌─────────────────────────────┐
        │          Tone               │
   S16  │      transformation         │
        └─────────────────────────────┘
                         │
                         ▼
   S17  ┌─────────────────────────────┐
        │          Output             │
        └─────────────────────────────┘
                         │
                         ▼
   S18            ┌─────────┐
                  │  Over   │
                  └─────────┘
```

# FIG. 5

# FIG. 6

Image signal ———
Control signal ———
Other signals - - - - - - -

# FIG. 7

Image signal
Control signal
Other signals

**Image signal transformation block 104**

Important zone select block 302

Buffer block for the inportant zone 400

Signal conversion block for the important zone 401

Control block 102

Buffer block for the rest 402

Signal conversion block for the rest 403

Tone transformation characteristics calculation block 105

Storage block 110

# FIG. 8

EP 1 871 094 A1

<table>
<tr><td colspan="2" align="center">**INTERNATIONAL SEARCH REPORT**</td><td colspan="2">International application No.<br>PCT/JP2006/307384</td></tr>
</table>

**A. CLASSIFICATION OF SUBJECT MATTER**
*H04N5/20*(2006.01), *G06T5/00*(2006.01), *H04N1/407*(2006.01), *H04N5/243*
(2006.01)

According to International Patent Classification (IPC) or to both national classification and IPC

**B. FIELDS SEARCHED**

Minimum documentation searched (classification system followed by classification symbols)
*H04N5/20*(2006.01), *G06T5/00*(2006.01), *H04N1/407*(2006.01), *H04N5/243*
(2006.01)

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 2004-242068 A (Konica Minolta Holdings Kabushiki Kaisha),<br>26 August, 2004 (26.08.04),<br>Par. Nos. [0099] to [0159]; Figs. 11 to 18<br>& US 2004/0151376 A1 & EP 1445731 A2 | 1-6,13<br>7-12,14,15 |
| Y | JP 2001-238177 A (Fuji Photo Film Co., Ltd.),<br>31 August, 2001 (31.08.01),<br>Full text; all drawings<br>(Family: none) | 7-9,14,15 |
| Y | JP 2000-13612 A (Minolta Co., Ltd.),<br>14 January, 2000 (14.01.00),<br>Full text; all drawings<br>& US 6735341 B1 | 10-12 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>09 May, 2006 (09.05.06) | Date of mailing of the international search report<br>23 May, 2006 (23.05.06) |
|---|---|
| Name and mailing address of the ISA/<br>Japanese Patent Office | Authorized officer |
| Facsimile No. | Telephone No. |

Form PCT/ISA/210 (second sheet) (April 2005)

**INTERNATIONAL SEARCH REPORT**

| International application No. |
|---|
| PCT/JP2006/307384 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2004-282661 A  (Seiko Epson Corp.),<br>07 October, 2004 (07.10.04),<br>Full text; all drawings<br>(Family: none) | 1-15 |

Form PCT/ISA/210 (continuation of second sheet) (April 2005)

**EP 1 871 094 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 3465226 A

- JP 2002094998 A